# EUROPÄISCHE PATENTANMELDUNG

(11) **EP 1 764 542 A1**
(43) Veröffentlichungstag der Anmeldung: **21.03.2007**
(21) Anmeldenummer: 05020403.1
(22) Anmeldetag: 19.09.2005
(51) Int. Cl.: F16M 5/00

(54) **Bausatz zur Erstellung einer Industrieanlage**

(71) Anmelder: SIEMENS AKTIENGESELLSCHAFT, 80333 München (DE)
(72) Erfinder: Saueressig, Horst, 47058 Duisburg (DE)

(57) **Zusammenfassung**

Die Erfindung betrifft einen Bausatz zur Erstellung einer Industrieanlage (1), wobei der Bausatz mehrere Module (2,3,4,5) umfasst, wobei die Module (2,3,4,5) einen Grundrahmen (6) aufweisen, auf dem Anlagenkomponenten (7,8,9,10,11,12,13) angeordnet sind und die Module (2,3,4,5) über Rohrleitungen (15) miteinander verbindbar sind, wobei die Rohrleitungen (15) in einem Modul (2,3,4,5) fest angeordnet sind. Der wesentliche Aspekt hierbei ist, dass beim Zusammenbau der Industrieanlage (1) die Rohrleitungen (15) bereits in den Modulen (2,3,4,5) fest installiert sind. Ein nachträglicher Einbau der bereits zusammengefügten Module (2,3,4,5) der Rohrleitungen (15) entfällt daher.

## Beschreibung

Die Erfindung betrifft einen Bausatz zur Erstellung einer Industrieanlage, wobei der Bausatz zumindest zwei Module umfasst, wobei die Module jeweils zumindest eine auf einem Grundrahmen angeordnete Anlagenkomponente aufweisen, wobei die Module über Rohrleitungen miteinander verbindbar sind.

Die Erfindung betrifft des Weiteren ein Verfahren zur Herstellung einer Industrieanlage, die aus mehreren Modulen zusammengebaut wird, wobei jeweils ein Modul eine Anlagenkomponente umfasst und die Module über Rohrleitungen miteinander verbunden werden.

Beim Bau von Industrieanlagen, beispielsweise von Luftverdichteranlagen, wird bisher üblicherweise jedes Projekt durch Spezialisten neu konzipiert. Der hierfür erforderliche Aufwand ist dadurch schon im Angebotsstadium sehr hoch. Bisher wurde versucht, den hierdurch bedingten Aufwand dadurch zu reduzieren, dass Spezialisten aus früheren oder ähnlichen Projekten möglichst viele einschlägige Tätigkeiten an vorhandenen Bauteilen für jüngere Projekte zu übernehmen hatten. Der Aufwand für die Durchführung eines Projektes ist vergleichsweise gering, wenn die Planung und die Auslegung der neu zu erstellenden Industrieanlage als Baukasten- oder Modulsystem konzipiert werden.

Die Industrieanlagen weisen in der Regel groß dimensionierte Anlagenkomponenten wie z. B. einen Verdichter, einen Kühler oder eine Dampfturbine auf. Diese Anlagenkomponenten werden auf so genannte Grundrahmen angeordnet und transportiert. Das Gebilde aus Anlagenkomponente und Grundrahmen wird als Modul bezeichnet.

Nach der Planung und Fertigung der Module, die zum Teil mehrere Tonnen schwer sind und eine Höhe von annähernd 10 Metern aufweisen, werden die Module einzeln zur Baustelle, auf der die Industrieanlage schließlich errichtet werden soll, transportiert. Der Transport solch groß dimensionierter Module stellt eine Herausforderung dar. Ein wesentlicher Aspekt bei der Errichtung der Industrieanlagen ist der Zusammenbau der Module, der möglichst schnell und sicher erfolgen soll. vor Ort werden die Module schließlich miteinander verbunden, wobei zwischen den einzelnen Anlagenkomponenten noch Rohrleitungen zu verlegen sind. Diese Rohrleitungen können z. T. 20 Tonnen schwer sein, was das zusammenbauen erschwert. Häufig hat man das Problem, dass an vielen Baustellen die Zugänglichkeit für einen geeigneten Kran beschränkt ist. Aufgrund oftmals unzureichend geschulten Personals besteht hierbei ein relativ großes Fehler- bzw. Gefährdungspotential.

Wünschenswert wäre, eine Anlage möglichst schnell und ohne großes Gefährdungspotential aufzubauen.

An dieser Stelle setzt die Erfindung an, deren Aufgabe es ist, einen Bausatz zur Erstellung einer Industrieanlage bereitzustellen, mit dem die Industrieanlage schnell zusammengebaut werden kann.

Eine weitere Aufgabe der Erfindung ist es, ein Verfahren zur Herstellung einer Industrieanlage anzugeben, wobei die Industrieanlage möglichst schnell aufgebaut werden kann.

Die auf den Bausatz hingerichtete Aufgabe wird gelöst durch den Anspruch 1.

Die auf das Verfahren hingerichtete Aufgabe wird gelöst durch den Anspruch 9.

Vorteilhafte Weiterbildungen sind in den Unteransprüchen enthalten.

Die Erfindung geht unter anderem von dem Aspekt aus, dass es vorteilhaft ist, die Module mit integrierten Rohrleitungen zu transportieren. Die Rohrleitungen werden hierbei fest an dem Modul angebracht. Das bedeutet, dass bei der Baustellenmontage ein kompliziertes und aufwändiges Bewegen der Rohrleitungen entfallen kann.

Die Module werden hierbei derart ausgelegt, dass die Rohrleitungen passgenau zueinander abgestimmt sind. Ein weiterer Aspekt ist, dass die Gefahr, die vorher dadurch bestand, dass die schweren Rohrleitungen bewegt werden mussten, nahezu entfällt.

In einer vorteilhaften Weiterbildung umfassen die Module Stützen, die derart ausgebildet sind, dass darauf ein weiteres Modul anbringbar ist.

Dadurch wird der vorteil erreicht, dass die Module übereinander angeordnet werden können. Beispielsweise könnte ein Modul, umfassend einen Verdichter, über einem Modul, umfassend einen Kühler, angeordnet werden. Man spart dadurch Platz.

In einer weiteren vorteilhaften Weiterbildung sind die Stützen im wesentlichen senkrecht auf den Grundrahmen angeordnet, was dazu führt, dass die Gewichtskräfte der oben liegenden Anlagenkomponenten direkt auf den unten liegenden Grundrahmen des unten liegenden Moduls übertragen werden.

In einer weiteren vorteilhaften Weiterbildung weist ein Modul einen einen Querträger aufweisenden Hilfsrahmen auf, wobei die Rohrleitungen an diesem Hilfsrahmen angebracht sind. Dadurch ist eine gute Möglichkeit angegeben, die Rohrleitungen einfach und schnell an den Modulen anzubringen. Die Rohrleitungen können hierbei durch Schweißen, Nieten oder ähnlichen Verbindungsmöglichleiten an den Querträgen angebunden werden.

In einer weiteren vorteilhaften Weiterbildung ist der Hilfsrahmen an den Stützen angebracht. Dadurch kann der Hilfsrahmen in der Höhe variiert werden, was je nach Leitungsdurchmesser und Höhe der Anlagenkomponente unterschiedlich sein kann.

In einer weiteren vorteilhaften Weiterbildung ist die Anlagenkomponente eines Moduls ein Luftverdichter und die Anlagenkomponente eines weiteren Moduls ein mit dem Luftverdichter über die Rohrleitung verbindbarer Kühler. Es hat sich gezeigt, dass bei diesen Anlagenkomponenten die erfindungsgemäße Anordnung besonders geeignet ist.

In einer weiteren vorteilhaften Weiterbildung ist die Anlagenkomponente eines Moduls eine Dampfturbine und ein mit der Dampfturbine verbindbarer verdichter mit einem Getriebe und die Anlagenkomponente eines weiteren Moduls ist eine über die Rohrleitung mit der Dampfturbine verbindbarer Kondensator und ein über die Rohrleitungen mit dem Verdichter verbindbarer Kühler. Auch hier ergibt sich der Aspekt, dass die erfindungsgemäße Lösung besonders geeignet ist für die vorgenannten Anlagenkomponenten.

Insbesondere ist die Industrieanlage als eine Luftverdichteranlage ausgebildet.

Zweckdienlicherweise werden die Rohrleitungen mittels Flansche miteinander verbunden, was eine besonders günstige und einfache Verbindungsmöglichkeit darstellt.

Nachfolgend wird die Erfindung anhand verschiedener Zeichnungen näher erläutert. Mit denselben Bezugszeichen versehene Komponenten haben die gleiche Funktionsweise.

### Dabei zeigen:

- Figur 1: eine Frontansicht einer Luftverdichteranlage,
- Figur 2: eine Draufsicht der Luftverdichteranlage,
- Figur 3: eine Seitenansicht von links der verdichteranlage,
- Figur 4: eine Seitenansicht von rechts der Verdichteranlage.

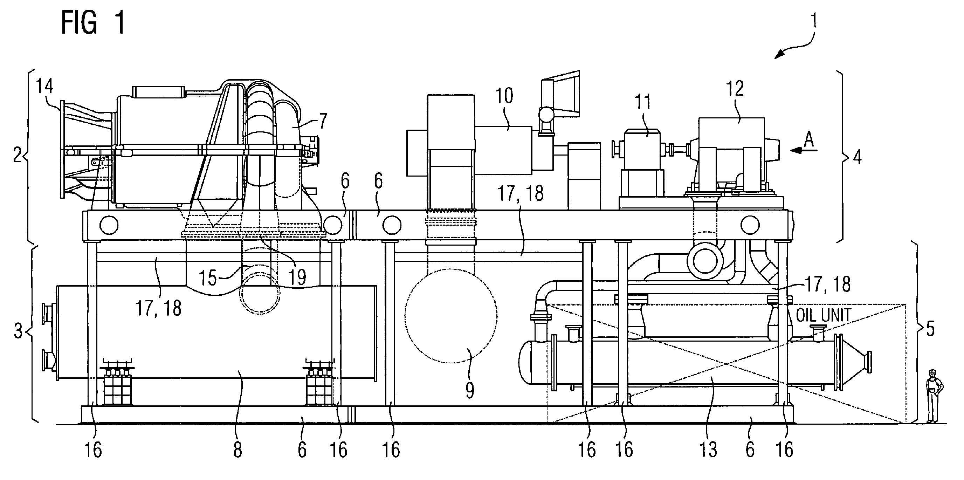

In Figur 1 ist eine Luftverdichteranlage 1 dargestellt. Die Verdichteranlage ist aus insgesamt vier Modulen 2, 3, 4, 5 aufgebaut. Jedes Modul umfasst einen Grundrahmen 6. Auf dem Grundrahmen 6 ist jeweils eine Anlagenkomponente 7, 8, 9, 10, 11, 12, 13 angebracht. Das Modul 2 umfasst einen Luftverdichter 7. Der Luftverdichter 7 saugt über einen Einlass 14 Luft ein, wobei die eingesaugte Luft verdichtet und zu dem im Modul 3 befindlichen Kühler 8 geführt wird. Angetrieben wird der Luftverdichter durch eine Dampfturbine 10, die im Modul 4 angeordnet ist. Des Weiteren ist im Modul 4 ein Getriebe 11 und ein weiterer Verdichter 12 angeordnet. Im Modul 5 ist ein Kondensator 9 und ein weiterer Kühler 13 angebracht.

Der Luftverdichter 7 ist über eine Rohrleitung 15 mit dem Kühler B verbunden. Die Grundrahmen 6 der Module 2 und 4 sind über Stützen 16 mit den Modulen 3 und 5 verbunden. Die Stützen 16 sind hierbei im Wesentlichen senkrecht auf dem Grundrahmen 6 angeordnet. Die Stützen 16 sind derart ausgebildet, dass die Module 2 und 4 darauf anbringbar sind.

Die Module 3 und 5 weisen hierbei einen einen Querträger 17 aufweisenden Hilfsrahmen 18 auf, wobei die Rohrleitung 15 an dem Hilfsrahmen 18 angebracht ist. Die Rohrleitung 15 kann hierbei durch Schweißung oder durch Nietung oder durch ähnliche Verbindungsmöglichleiten angebracht werden.

Die Rohrleitungen 15 sind sozusagen mit einem Modul 3 fest verbunden. Die Module 2, 4, 3, 5 können separat voneinander transportiert werden. Die Rohrleitungen werden mittels Flansche 19 miteinander verbunden. Andere Verbindungsmöglichleiten sind denkbar.

Durch den Hilfsrahmen 18, der die Stützen 16 oben miteinander verbindet, können die Rohrleitungen 15 vor einer Demontage im Werk fest mit ihrem zugehörigem Modul verbunden werden, sodass die alte Passgenauigkeit beim Aufsetzen der Module 2, 3, 4, 5 nach dem Transport auf der Baustelle wieder eindeutig gegeben ist.

Dadurch wird die Zeit der Baustellenmontage und das damit verbundene Risiko erheblich reduziert.

Die Stützen 16 sind am Grundrahmen 6 angeschweißt. Ebenso wird der Hilfsrahmen 18 an den Stützen 16 angeschweißt. Die Rohrleitungen 15 werden am Hilfsrahmen 18 fixiert. Der obere Teil des Rahmens wird zur Montage auf die Stützen 16 aufgesetzt und auf der Baustelle verschweißt.

Der Luftverdichter 7 kann als Axial-Radialverdichter ausgebildet sein und von einer 70MW-Dampfturbine 10 mit zwei Wellenenden angetrieben werden, Der Verdichter 12 kann als Einwellen-Topfverdichter ausgebildet sein. Diese Industrieanlage kann ca. 630 Tonnen wiegen und eine Höhe von 16,5 Metern aufweisen.

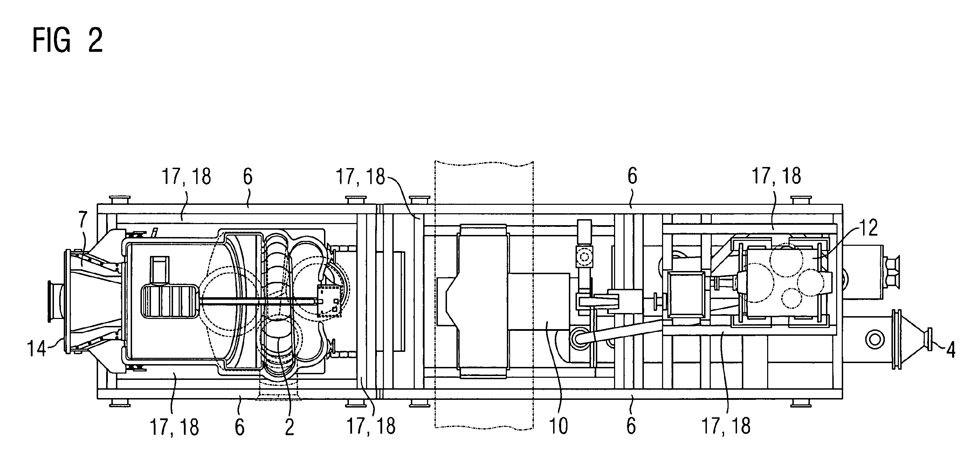

In der Figur 2 ist eine Draufsicht auf die Industrieanlage 1 dargestellt. In dieser Darstellung ist deutlich zu sehen, dass der Hilfsrahmen 18 entlang des Grundrahmens 6 angeordnet wird.

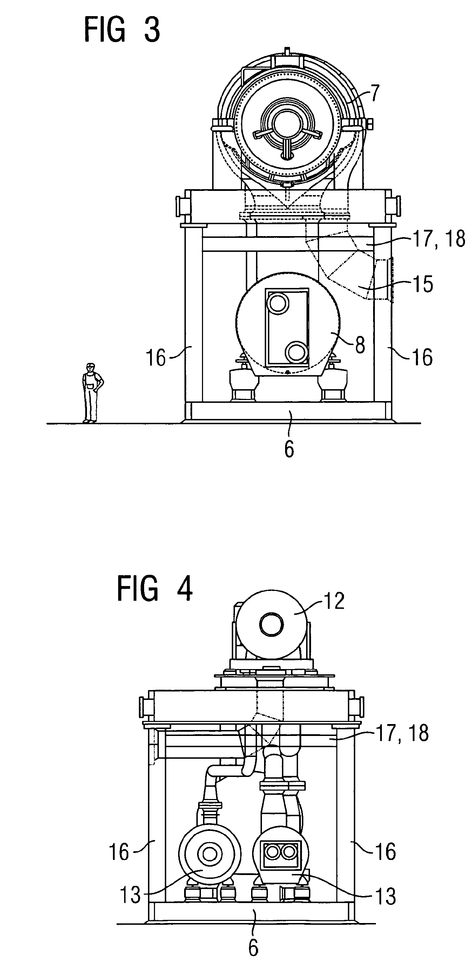

In den Figuren 3 und 4 sind Seitenansichten von links bzw. von rechts der Industrieanlage 1 aus Figur 1 zu sehen. In beiden Figuren ist der Hilfsrahmen 18, an den die Rohrleitung 15 angebunden wird, deutlich zu sehen.

## Patentansprüche

1. Bausatz zur Erstellung einer Industrieanlage (1),
wobei der Bausatz zumindest zwei Module (2,3,4,5) umfasst,
wobei die Module (2,3,4,5) jeweils zumindest eine auf einem Grundrahmen (16) angeordnete Anlagenkomponente (7, 6, 9, 10, 11, 12, 13) aufweisen,
wobei die Module (2,3,4,5) über Rohrleitungen (15) miteinander verbindbar sind,
**dadurch gekennzeichnet, dass**
die Rohrleitungen (15) in einem Modul (2,3,4,5) fest angeordnet sind.

2. Bausatz nach Anspruch 1,
bei dem die Module (2,3,4,5) Stützen (16) umfassen,
die derart ausgebildet sind, dass darauf ein weiteres Modul (2,3,4,5) anbringbar ist.

3. Bausatz nach Anspruch 2,
bei dem die Stützen (16) im Wesentlichen senkrecht auf dem Grundrahmen (6) angeordnet sind.

4. Bausatz nach Anspruch 1, 2 oder 3,
bei dem zumindest ein Modul (2,3,4,5) einen einen Querträger (17) aufweisenden Hilfsrahmen (18) aufweist und
die Rohrleitung (15) an diesem Hilfsrahmen (18) angebracht ist,

5. Bausatz nach Anspruch 4,
bei dem der Hilfsrahmen (18) an den Stützen (16) angebracht ist.

6. Bausatz nach einem der vorhergehenden Ansprüche,
bei dem die Anlagenkomponerlte (7,8,9,10,11,12,13) eines Moduls (2,3,4,5) ein Luftverdichter (7) und die Anlagenkomponente (7,8,9,10,11,12,13) eines weiteren Moduls (2,3,4,5) ein mit dem Luftverdichter (7) über die Rohrleitung (15) verbindbarer Kühler (8) ist.

7. Bausatz nach Anspruch 5,
bei dem die Anlagenkomponente (7,8,9,10,11,12,13) eines Moduls (2,3,4,5) eine Dampfturbine (10) und ein mit der Dampfturbine (10) verbindbarer Verdichter (12) mit einem Getriebe (11) ist und die Anlagenkomponente (7,8,9,10,11,12,13) eines weiteren Moduls eine über die Rohrleitungen (15) mit der Dampfturbine (10) verbindbarer Kondensator (9) und ein über die Rohrleitungen (15) mit dem Verdichter (12) verbindbarer Kühler (13) ist.

8. Bausatz nach einem der vorhergehenden Ansprüche,
bei dem die Industrieanlage (1) eine Luftverdichteranlage ist.

9. Verfahren zur Herstellung einer Industrieanlage (1), die aus mehreren Modulen (2,3,4,5) zusammengebaut wird,
wobei jeweils ein Modul (2,3,4,5) eine Anlagenkompvnente (7,8,9,10,11,12,13) umfasst und die Module (2,3,4,5) über Rohrleitungen (15) miteinander verbunden werden,
**dadurch gekennzeichnet, dass**
die Rohrleitungen (15) zuerst in den Modulen (2,3,4,5) angebracht werden, bevor die Module (2,3,4,5) miteinander verbunden werden.

10. Verfahren nach Anspruch 7,
bei dem zwei Module (2,3,4,5) übereinander angeordnet werden.

11. verfahren nach Anspruch 8,
bei dem die Rohrleitungen (15) mittels Flansche (19) miteinander verbunden werden.
